# EUROPÄISCHE PATENTSCHRIFT

(11) **EP 2 855 543 B1**
(45) Veröffentlichungstag und Bekanntmachung des Hinweises auf die Patenterteilung: **21.08.2019**
(21) Anmeldenummer: 13725702.8
(22) Anmeldetag: 29.05.2013
(51) Int. Cl.: C08F 218/08, C04B 28/02, C04B 24/26, C04B 26/08, C08F 210/02, C08J 3/00, C08F 214/06, C08J 3/05, C04B 111/00, C04B 111/10, C04B 111/70, C04B 111/72, C04B 111/62

(54) **VINYLACETAT-COPOLYMERE FÜR HYDRAULISCH ABBINDENDE BAUSTOFFMASSEN**
VINYL ACETATE COPOLYMERS FOR HYDRAULICALLY SETTING CONSTRUCTION MATERIAL MASSES
COPOLYMÈRES D'ACÉTATE DE VINYLE POUR MASSES DE MATÉRIAUX DE CONSTRUCTION À PRISE HYDRAULIQUE

(30) Priorität: 31.05.2012 DE 102012209210
(43) Veröffentlichungstag der Anmeldung: 08.04.2015
(73) Patentinhaber: Wacker Chemie AG, 81737 München (DE)
(72) Erfinder: WEITZEL, Hans-Peter, 84571 Reischach (DE); BRAUNSPERGER, Robert, 84547 Emmerting (DE); SEIDEL, Jessica, 84539 Zangberg (DE)
(74) Vertreter: Ege, Markus
(86) Internationale Anmeldenummer: PCT/EP2013/061137
(87) Internationale Veröffentlichungsnummer: WO 2013/178721

(56) Entgegenhaltungen:
- EP-A1- 0 334 591
- EP-A2- 0 255 363
- EP-A2- 1 134 255
- WO-A1-2006/099960
- DE-A1- 2 614 261
- DE-A1-102009 003 196
- US-A- 3 883 489
- US-A- 4 009 135

## Beschreibung

Die Erfindung betrifft Vinylacetat-Copolymere in Form von Schutzkolloid-stabilisierten, in Wasser redispergierbaren Polymerpulvern, Verfahren zu deren Herstellung sowie Baustoffmassen enthaltend hydraulisch abbindende Bindemittel, Füllstoffe und Vinylacetat-Copolymere in Form von Schutzkolloid-stabilisierten, in Wasser redispergierbaren Polymerpulvern und deren Verwendung beispielsweise als Klebemörtel, wie Fliesenkleber für keramische Fliesen.

Die Anforderungen an hydraulisch abbindende Baustoffmassen, wie Fliesenkleber, sind in den letzten Jahren immer höher geworden. So beschreibt die EN12004 die verschiedenen Güteklassen der zementären Fliesenkleber. Darin werden beispielsweise hochqualitative Kleber durch das Kürzel C2 gekennzeichnet. C steht für zementäre Kleber und 2 steht für eine Haftzugfestigkeit von mindestens 1,0 N/mm² nach verschiedenen Lagerungen (bestimmt nach EN1348). Die Schwierigkeit in der Praxis besteht darin, hydraulisch abbindende Baustoffmassen bereitzustellen, die nach Applikation auf einen Untergrund hohe Haftzugfestigkeiten sowohl nach Wasserlagerung als auch nach Wärmebelastung zeigen. Für hohe Haftzugfestigkeiten nach Wasserlagerung werden typischerweise hydrophobe Copolymere, wie Copolymere aus Vinylacetat, Butylacrylat oder Ethylen, verwendet. Derartige Copolymere mit einer vergleichsweise niedrigen Glasübergangstemperatur Tg von < 10°C zeigen aber keine ausreichende Performance nach Wärmebelastung. Umgekehrt zeigen beispielsweise Copolymere aus Vinylacetat und Ethylen mit niedrigem Ethylengehalt und einer Glasübergangstemperatur Tg von > 10°C zwar gute Werte für Haftzugfestigkeiten nach Wärmebelastung, sind aber sehr anfällig nach Wasserlagerung und erfüllen somit nicht die geforderte Norm.

Als Lösungsansätze für diese Problemstellung wurden Mischungen aus unterschiedlichen Polymeren empfohlen. So beschreibt die EP2158265 Polymermischungen aus einem Vinylacetat-Ethylen-Copolymer und einem Copolymer von einem Vinylester einer kurzkettigen Carbonsäure und einem Vinylester einer langkettigen Carbonsäure. Die WO2006/099960 beschreibt Polymermischungen aus einem Polymer mit einer Glasübergangstemperatur von 10 bis 80°C und einem Polymer mit einer Glasübergangstemperatur von -60 bis 20°C, wobei beide Polymere maximal 70 mol% Vinylacetateinheiten enthalten. Bei diesen Ansätzen werden also zunächst zwei unterschiedliche Polymere unabhängig voneinander hergestellt und anschließend gemischt, um die Normforderungen für die hydraulisch abbindende Baustoffmassen erfüllen zu können, was insgesamt aufwändig ist.

Die EP1262465 beschreibt ein aufwändig in zwei Stufen herzustellendes Copolymer aus Vinylacetat, Ethylen und Methylmethacrylat, indem zuerst Vinylacetat mit Ethylen und anschließend Methylmethacrylat polymerisiert wird.

Hydraulisch abbindende Baustoffmassen sind Massengüter, auf denen ein zunehmender ökonomischer Druck lastet. Diese ökonomischen Anforderungen können teure Monomerbausteine, wie Methylmethacrylat oder Butylacrylat, oder aufwändige Herstellverfahren nicht erfüllen.

Vor diesem Hintergrund bestand die Aufgabe, Baustoffmassen enthaltend hydraulisch abbindende Bindemittel, insbesondere Mörtelzusammensetzungen, bereitzustellen, mit denen die C2 Norm gemäß EN12004 erfüllt werden kann, und die die Nachteile des Standes der Technik überwinden.

Überraschenderweise wurde diese Aufgabe mit Baustoffmassen gelöst, die Vinylacetat-Copolymere auf Basis von 40 bis 80 Gew.-% Vinylacetat, 15 bis 35 Gew.-% Vinylchlorid, 1 bis 25 Gew.-% Ethylen und gegebenenfalls weiteren ethylenisch ungesättigten Comonomeren enthalten.

Verschiedentlich wurden schon Copolymere von Vinylchlorid und Ethylen sowie Vinylacetat beschrieben. So empfiehlt die WO05118684 den Einsatz von Copolymeren aus Vinylchlorid und Ethylen in Form von redispergierbaren Pulvern für Fassadenbeschichtungen wie Skim Coats. Skim Coats sind dünne Beschichtungen mit Schichtdicken von wenigen Millimetern und entsprechend geringen Anforderungen an die Bindekraft.

Die EP0149098 beschreibt redispergierbare Dispersionspulver auf Basis von Copolymeren aus Ethylen und weiteren Monomeren, wobei die weiteren Monomeren zu mindestens 60% aus Vinylchlorid bestehen. Bei Einsatz dieser Dispersionspulver in Fliesenklebern werden die in der C2 Norm geforderten Haftzugfestigkeiten von mindestens 1,0 N/mm2 nicht zufriedenstellend erfüllt. Bezüglich der Haftzugfestigkeit nach Wärmelagerung wurden keinerlei Aussagen getroffen. Das Dispersionspulver Elotex 10184 enthält ein Terpolymer basierend auf Vinylacetat, Ethylen sowie 10 Gewichtsprozent Vinylchlorid. Auch solche Polymere werden den Anforderungen der C2 Norm der EN12004 nicht gerecht.

Gegenstand der Erfindung sind Vinylacetat-Copolymere in Form von Schutzkolloid-stabilisierten, in Wasser redispergierbaren Polymerpulvern erhältlich mittels radikalisch initiierter Polymerisation von ethylenisch ungesättigten Monomeren in wässrigem Medium und anschließender Trocknung, dadurch gekennzeichnet, dass bei der Polymerisation als ethylenisch ungesättigte Monomere 40 bis 80 Gew.-% Vinylacetat, 15 bis 35 Gew.-% Vinylchlorid, 1 bis 25 Gew.-% Ethylen und gegebenenfalls ein oder mehrere weitere ethylenisch ungesättigte Comonomere eingesetzt werden, wobei sich die Angaben in Gew.-% auf das Gesamtgewicht der insgesamt eingesetzten ethylenisch ungesättigten Monomere beziehen und sich auf 100 Gew.-% aufaddieren, und dass keine Emulgatoren und als Schutzkolloide keine Cellulose und keine Cellulose-Derivate enthalten sind.

Die Vinylacetat-Copolymere basieren vorzugsweise auf 50 bis 75 Gew.-% Vinylacetat, 20 bis 30 Gew.-% Vinylchlorid und 5 bis 20 Gew.-% Ethylen; wobei sich die Angaben in Gew.-% auf das Gesamtgewicht der insgesamt eingesetzten ethylenisch ungesättigten Monomere beziehen.

Beispiele für weitere Comonomere sind Vinylester von Carbonsäuren mit 3 bis 15 C-Atomen, Ester der Acrylsäure oder Methacrylsäure, sowie von Ethylen verschiedene Olefine, wie Propylen.

Bevorzugte Vinylester von Carbonsäuren mit 3 bis 15 C-Atomen sind Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen.

Geeignete Ester der Acrylsäure oder Methacrylsäure sind beispielsweise Ester von unverzweigten oder verzweigten Alkoholen mit 1 bis 15 C-Atomen, wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat.

Bevorzugte weitere Comonomere sind Vinylester von Carbonsäuren mit 3 bis 15 C-Atomen.

Die weiteren Comonomere werden vorzugsweise zu 0 bis 10 Gew.-% eingesetzt, bezogen auf das Gesamtgewicht der insgesamt eingesetzten ethylenisch ungesättigten Monomere. Die weiteren Comonomere umfassen vorzugsweise weniger als 5 Gew.-%, besonders bevorzugt weniger als 2,5 Gew.-% und noch mehr bevorzugt weniger als 1 Gew.-% Ester der Acrylsäure oder Methacrylsäure, je bezogen auf das Gesamtgewicht der insgesamt eingesetzten ethylenisch ungesättigten Monomere. Am meisten bevorzugt enthalten die Vinylacetat-Copolymere keine Monomer-Einheit eines Esters der Acrylsäure oder Methacrylsäure. Am allermeisten bevorzugt werden keine weiteren Comonomere eingesetzt.

Gegebenenfalls können noch 0,05 bis 10 Gew.-%, vorzugsweise 0,05 bis 5 Gew.-% und besonders bevorzugt 0,05 bis 2,5 Gew.-%, bezogen auf das Gesamtgewicht der ethylenisch ungesättigten Monomere, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und - nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (A-GA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxid-funktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Bevorzugte erfindungsgemäße Vinylacetat-Copolymere enthalten aber keine (Meth)Acrylsäure-Einheit und/oder keine Einheit eines (Meth)Acrylsäure-Derivats, wie die oben genannten Siliciumfunktionellen Comonomere oder Carbonsäurenitrile oder insbesondere Carbonsäureamide, Sulfonsäuren, Epoxid-funktionelle Comonomere, (Meth)Acrylsäurehydroxyalkylester oder Acetylacetoxyethyl(meth)acrylat. Bevorzugte erfindungsgemäße Vinylacetat-Copolymere enthalten auch keine Einheiten von vorvernetzenden Comonomeren und/oder nachvernetzenden Comonomeren. Besonders bevorzugte erfindungsgemäße Vinylacetat-Copolymere enthalten keine Hilfsmonomer-Einheit.

Die Monomerauswahl bzw. die Auswahl der Gewichtsanteile der Monomere erfolgt dabei so, dass im Allgemeinen eine Glasübergangstemperatur Tg von -10°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Ein weiterer Gegenstand der Erfindung sind Verfahren zur Herstellung der Vinylacetat-Copolymere in Form von Schutzkolloid-stabilisierten, in Wasser redispergierbaren Polymerpulvern durch radikalisch initiierte Polymerisation von ethylenisch ungesättigten Monomeren in wässrigem Medium und anschließende Trocknung, dadurch gekennzeichnet, dass als ethylenisch ungesättigte Monomere 40 bis 80 Gew.-% Vinylacetat, 15 bis 35 Gew.-% Vinylchlorid, 1 bis 25 Gew.-% Ethylen und gegebenenfalls ein oder mehrere weitere ethylenisch ungesättigte Comonomere polymerisiert werden, wobei sich die Angaben in Gew.-% auf das Gesamtgewicht der insgesamt eingesetzten ethylenisch ungesättigten Monomere beziehen und sich auf 100 Gew.-% aufaddieren, und keine Emulgatoren sowie als Schutzkolloide keine Cellulose und keine Cellulose-Derivate eingesetzt werden.

Die Herstellung der Vinylacetat-Copolymere erfolgt im Allgemeinen nach dem Emulsionspolymerisationsverfahren. Die Vinylacetat-Polymere
fallen dabei im Allgemeinen in Form von Schutzkolloid-stabilisierten wässrigen Dispersionen an.

Die Polymerisationstemperatur beträgt im Allgemeinen 40°C bis 150°C, vorzugsweise 60°C bis 90°C. Die Initiierung der Polymerisation erfolgt mit den für die Emulsionspolymerisation gebräuchlichen Redox-Initiator-Kombinationen. Beispiele für geeignete Oxidationsinitiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, t-Butylperoxopivalat, Cumolhydroperoxid, Isopropylbenzolmonohydroperoxid Azobisisobutyronitril. Bevorzugt werden die Natrium-, Kalium- und Ammoniumsalze der Peroxodischwefelsäure und Wasserstoffperoxid. Die genannten Initiatoren werden im Allgemeinen in einer Menge von 0,01 bis 2,0 Gew.-%, bezogen auf das Gesamtgewicht der ethylenisch ungesättigten Monomere, eingesetzt.

Geeignete Reduktionsmittel sind beispielsweise die Sulfite und Bisulfite der Alkalimetalle und von Ammonium, wie Natriumsulfit, die Derivate der Sulfoxylsäure wie Zink- oder Alkaliformaldehydsulfoxylate, beispielsweise Natriumhydroxymethansulfinat (Brüggolit) und (Iso-)Ascorbinsäure. Bevorzugt werden Natriumhydroxymethansulfinat und (Iso-)Ascorbinsäure. Die Reduktionsmittelmenge beträgt vorzugsweise 0,015 bis 3 Gew.-%, bezogen auf das Gesamtgewicht der ethylenisch ungesättigten Monomere.

Die genannten Oxidationsmittel, insbesondere die Salze der Peroxodischwefelsäure, können auch alleinig als thermische Initiatoren eingesetzt werden.

Zur Steuerung des Molekulargewichts können während der Polymerisation regelnde Substanzen eingesetzt werden. Falls Regler eingesetzt werden, werden diese üblicherweise in Mengen zwischen 0,01 bis 5,0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Beispiele für geeignete Schutzkolloide sind teilverseifte oder vollverseifte Polyvinylalkohole. Bevorzugt sind teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0,1 bis 10 Gew.-%, bezogen auf das Gesamtgewicht des teilverseiften Polyvinylalkohols. Es können auch Gemische der genannten Polyvinylalkohole eingesetzt werden.

Weitere bevorzugte Polyvinylalkohole sind teilverseifte, hydrophobierte Polyvinylalkohole, die durch polymeranaloge Umsetzung, beispielsweise Acetalisierung der Vinylalkoholeinheiten mit C₁- bis C₄-Aldehyden wie Butyraldehyd, erhalten werden. Der Anteil der hydrophoben Einheiten beträgt vorzugsweise 0,1 bis 10 Gew.-%, bezogen auf das Gesamtgewicht des teilverseiften Polyvinylacetats. Der Hydrolysegrad beträgt beispielsweise 80 bis 95 Mol-%, vorzugsweise 85 bis 94 Mol-%; die Höpplerviskosität (bestimmt gemäß DIN 53015, Methode nach Höppler, in 4 %-iger wässriger Lösung bei 20°C) beträgt beispielsweise 1 bis 30 mPas, vorzugsweise 2 bis 25 mPas.

Am meisten bevorzugt werden Polyvinylalkohole mit einem Hydrolysegrad von 85 bis 94 Mol-% und einer Höpplerviskosität in 4 %-iger wässriger Lösung von 3 bis 15 mPas (Methode nach Höppler bei 20°C, DIN 53015). Die genannten Schutzkolloide sind mittels dem Fachmann bekannter Verfahren zugänglich.

Die Polyvinylalkohole werden im Allgemeinen in einer Menge von insgesamt 1 bis 20 Gew.-%, bezogen auf das Gesamtgewicht der ethylenisch ungesättigten Monomere, bei der Polymerisation zugesetzt.

Als Schutzkolloide werden keine Cellulose und keine Cellulose-Derivate eingesetzt. Besonders bevorzugt werden als Schutzkolloide neben ein oder mehreren Polyvinylalkoholen keine weiteren Schutzkolloide eingesetzt.

Bei dem erfindungsgemäßen Verfahren wird ohne Zusatz von Emulgatoren polymerisiert. Beispiele für Emulgatoren sind gängige anionische, kationische oder nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside, wie Alkylpolyglykolether oder Alkylarylpolyglykolether mit 8 bis 40 Ethylenoxid-Einheiten.

Die Polymerisation kann in Druckreaktoren und/oder Drucklosreaktoren durchgeführt werden. Als Druckreaktoren bzw. Drucklosreaktoren können die herkömmlichen, entsprechend dimensionierten Stahlreaktoren mit Rühreinrichtung, Heiz-/Kühlsystemen sowie Leitungen zur Zuführung der Edukte bzw. Abführung der Produkte eingesetzt werden. Der bevorzugte Arbeitsdruck im Druckreaktor beträgt 3 bis 120 bar, besonders bevorzugt 10 bis 80 bar. Der bevorzugte Arbeitsdruck im Drucklosreaktor beträgt 100 mbar bis 5 bar, besonders bevorzugt 200 mbar bis 1 bar.

Die Polymerisation kann in Batch-, Semibatch-Verfahren oder in kontinuierlichem Verfahren erfolgen.

Im Falle der Batch- oder Semibatch-Verfahren können die Monomere insgesamt vorgelegt oder zudosiert werden. Vorzugsweise wird so vorgegangen, dass 50 bis 100 Gew.-%, insbesondere mehr als 70 Gew.-% der Monomere, bezogen auf das Gesamtgewicht der insgesamt eingesetzten Monomere, vorgelegt und die verbleibenden Monomere später zudosiert werden. Vinylchlorid wird vorzugsweise zu mindestens 50 Gew.-% der Gesamtmenge an Vinylchlorid vorgelegt und die gegebenenfalls verbleibende restliche Menge an Vinylchlorid wird zudosiert. Die Dosierungen können separat (räumlich und zeitlich) durchgeführt werden, oder die zu dosierenden Komponenten können alle oder teilweise voremulgiert dosiert werden.

Der Schutzkolloid-Anteil kann sowohl vollständig vorgelegt werden, als auch teilweise dosiert werden. Vorzugsweise werden mindestens 70 Gew.-% der Schutzkolloide vorgelegt, besonders bevorzugt wird der Schutzkolloid-Anteil vollständig vorgelegt.

In einer bevorzugten Ausführungsform wird die Polymerisation in einer Rührkesselkaskade umfassend ein oder mehrere, insbesondere mindestens zwei Druckreaktoren und ein oder mehrere Drucklosreaktoren kontinuierlich durchgeführt. In einer Rührkesselkaskade sind die einzelnen Reaktoren über Rohrleitungen miteinander verbunden. Der Massestrom durchläuft die Rührkesselkaskade beginnend im ersten Reaktor und dann durch jeden weiteren Reaktor. Die einzelnen Reaktoren sind vorzugsweise in einer Reihe, d.h. linear hintereinander angeordnet. Alle Stoffe werden vorzugsweise kontinuierlich zugeführt und das Endprodukt wird vorzugsweise aus dem letzten Reaktor, vorzugsweise dem dritten Reaktor, besonders bevorzugt einem Drucklosreaktor kontinuierlich entnommen. Besonders bevorzugt ist eine Kombination aus zwei Druckreaktoren und einem Drucklosreaktor, insbesondere in dieser Reihenfolge. Vorzugsweise werden mindestens 75 Gew.-%, besonders bevorzugt 100 Gew.-% des insgesamt eingesetzten Vinylchlorids in den ersten Reaktor der Rührkesselkaskade zudosiert.

Der erste Reaktor der Rührkesselkaskade ist bevorzugt ein Druckreaktor. Der letzte Reaktor der Rührkesselkaskade ist bevorzugt ein Drucklosreaktor.

Gerade diese Maßnahmen sind besonders vorteilhaft, um die erfindungsgemäß eingesetzten Monomermengen miteinander zu polymerisieren.

Der Monomerumsatz wird mit der Initiatordosierung gesteuert. Die Initiatoren werden vorzugsweise insgesamt so zudosiert, dass eine kontinuierliche Polymerisation gewährleistet ist.

Nach Abschluss der Polymerisation, insbesondere im Druckreaktor, kann zur Restmonomerentfernung in Anwendung bekannter Methoden in einem Drucklosreaktor nachpolymerisiert werden, im Allgemeinen durch mit Redoxkatalysator initiierter Nachpolymerisation. In den Drucklosreaktoren werden daher beide Initiatorkomponenten im nötigen Maße für die Endkonfektionierung zugegeben. Flüchtige Restmonomere können auch mittels Destillation, vorzugsweise unter reduziertem Druck, und gegebenenfalls unter Durchleiten oder Überleiten von inerten Schleppgasen, wie Luft, Stickstoff oder Wasserdampf, entfernt werden.

Die mit dem erfindungsgemäßen Verfahren erhältlichen Vinylacetat-Copolymere in Form von wässrigen Dispersionen haben einen Feststoffgehalt von vorzugsweise 30 bis 75 Gew.-% und besonders bevorzugt 50 bis 65 Gew.-%.

Die Vinylacetat-Copolymere liegen in Form von Schutzkolloid-stabilisierten, in Wasser redispergierbaren Polymerpulvern vor. Zur Herstellung der Vinylacetat-Copolymere in Form von in Wasser redispergierbaren Polymerpulver werden die wässrigen Dispersionen, gegebenenfalls nach Zusatz von Schutzkolloiden als Trocknungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt.

In der Regel wird die Trocknungshilfe in einer Gesamtmenge von 3 bis 30 Gew.-%, bezogen auf die polymeren Bestandteile der Dispersion, eingesetzt. Das heißt, die Gesamtmenge an Schutzkolloid vor dem Trocknungsvorgang soll allgemein mindestens 3 bis 30 Gew.-%, bezogen auf den Polymeranteil betragen; bevorzugt werden 5 bis 20 Gew.-%, bezogen auf den Polymeranteil, eingesetzt.

Geeignete Trocknungshilfen sind beispielsweise teilverseifte Polyvinylalkohole; Polyvinylpyrrolidone; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Mela minformaldehydsulfonate, Naphthalinformaldehydsulfonate, Styrolmaleinsäure- und Vinylethermaleinsäure-Copolymere. Bevorzugt werden keine weiteren Schutzkolloide als Polyvinylalkohole als Trocknungshilfe eingesetzt.

Vorzugsweise enthalten die Vinylacetat-Copolymere in Form von in Wasser redispergierbaren Polymerpulvern neben einem oder mehreren Polyvinylalkoholen keine weiteren Schutzkolloide.

Bei der Verdüsung hat sich vielfach ein Gehalt von bis zu 1,5 Gew.-% Antischaummittel, bezogen auf die Vinylacetat-Copolymere, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die Viskosität der zu verdüsenden Speise wird über den Feststoffgehalt so eingestellt, dass im Allgemeinen ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt im Allgemeinen > 35%, bevorzugt > 45%.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Ein weiterer Gegenstand der Erfindung sind Baustoffmassen enthaltend ein oder mehrere hydraulisch abbindende Bindemittel, ein oder mehrere Füllstoffe und gegebenenfalls ein oder mehrere Additive, dadurch gekennzeichnet, dass die Baustoffmassen zusätzlich ein oder mehrere erfindungsgemäße Vinylacetat-Copolymere in Form von Schutzkolloid-stabilisierten, in Wasser redispergierbaren Polymerpulvern enthalten.

Beispiele für hydraulisch abbindende Bindemittel sind Kalkhydrat, Flugasche, Metakaolin, Flugasche, Diatomeenerde, amorphes Silica, Gips und vorzugsweise Zement, wie Portlandzemente der Gruppe CEM I, II und III, Trass-, Hütten-, Magnesia-, Phosphatzement und/oder Aluminatzemente. Es können auch Weißzemente verwendet werden, insbesondere um die Farbe der Baustoffmassen einzustellen. Es können auch Mischungen von hydraulisch abbindenden Bindemitteln eingesetzt werden.

Als Füllstoffe können beispielsweise Kalksteinmehl, Marmor, Ton, Talkum oder vorzugsweise die gängigen Quarzsande oder Carbonate, wie Calciumcarbonate, eingesetzt werden. Übliche Korngrößen der Füllstoffe sind 0,5 bis 5,0 mm, bevorzugt 1,0 bis 3,0 mm.

Typische Rezepturen der Baustoffmassen enthalten im Allgemeinen 10 bis 50 Gew.-%, insbesondere 20 bis 45 Gew.-% hydraulisch-abbindende Bindemittel, 0,5 bis 15 Gew.-%, insbesondere 1 bis 10 Gew.-% Vinylacetat-Copolymere, 45 bis 80 Gew.-%, vorzugsweise 50 bis 70 Gew.-% Füllstoffe und gegebenenfalls 0 bis 5 Gew.-%, insbesondere 0,1 bis 3 Gew.-% Additive, wobei sich die Angaben in Gew.-% auf das Trockengewicht der Baustoffmassen beziehen und sich insgesamt auf 100 Gew.-% addieren.

Die Baustoffmassen liegen vorzugsweise in Form von Trockenmischungen vor. Die Baustoffmassen werden im Allgemeinen direkt vor ihrer Applikation durch Zugabe von Wasser in wässrige Baustoffmassen überführt.

Zur Verbesserung der Verarbeitungseigenschaften können den Baustoffmassen Additive zugegeben werden. Übliche Additive sind Verdickungsmittel, beispielsweise Polysaccharide wie Celluloseether und modifizierte Celluloseether, Stärkeether, Guar Gum, Xanthan Gum, Polycarbonsäuren wie Polyacrylsäure und deren Teilester, sowie Polyvinylalkohole, welche gegebenenfalls acetalisiert oder hydrophob modifiziert sein können, Casein und assoziativ wirkende Verdicker. Übliche Additive sind auch Abbindebeschleuniger, beispielsweise Alkali- oder Erdalkalisalze von anorganischen oder organischen Säuren. Darüber hinaus sind noch zu nennen: Hydrophobierungsmittel, Filmbildehilfsmittel, Dispergiermittel, Schaumstabilisatoren, Entschäumer, Verflüssiger und Fließmittel.

Die erfindungsgemäßen Baustoffmassen können insbesondere als Baukleber, Putze, Spachtelmassen, Fußbodenspachtelmassen, Verlaufsmassen, Dichtschlämme, Fugenmörtel oder zur Betonmodifizierung eingesetzt werden. Bevorzugt ist der Einsatz als Vollwärmeschutzkleber oder Fliesenkleber, insbesondere für keramische Fliesen.

Überraschenderweise wurde gefunden, dass, entgegengesetzt zur gängigen Lehrmeinung, die Absenkung des Vinylchloridgehaltes und Erhöhung des Vinylacetatsanteils in den Vinylacetat-Copolymeren im Vergleich zur EP0149098 zu einer Verbesserung der Haftzugfestigkeit nach Wasserlagerung der Baustoffprodukte führt. Durch eine Erhöhung des Anteils des im Vergleich zu Vinylchlorid weniger hydrophoben Vinylacetats würde der Fachmann eine Verschlechterung der Haftzugfestigkeit nach Wasserlagerung erwarten. Ebenso überraschend war es, dass trotz des signifikanten Vinylchloridgehaltes der erfindungsgemäßen Vinylacetat-Copolymere die Baustoffprodukte auch nach Wärmelagerung sehr gute Haftzugfestigkeiten aufwiesen. Für all diese Effekte erwies sich die Zusammensetzung der erfindungsgemäßen Vinylacetat-Copolymere als essentiell.

Vorteilhafterweise können bei der erfindungsgemäßen Vorgehensweise auch ausschließlich die im technischen Großmaßstab kostengünstig verfügbaren und einfach handhabbaren Monomere, nämlich Vinylacetat, Ethylen und Vinylchlorid, eingesetzt werden. Vinylchlorid ist auf Grund der Herstellung basierend auf Steinsalz ein traditionell kostengünstiges Monomer. Überraschend war auch, dass Vinylchlorid in den erfindungsgemäßen Mengen mit Vinylacetat und Ethylen zu Polymeren mit hoher Bindekraft copolymerisiert werden konnte. Denn Vinylchlorid weist an sich bekanntermaßen ungünstigere Copolymerisationsparameter mit Vinylacetat und Ethylen auf als z.B. Vinylacetat mit Ethylen, so dass derartige Polymere zur Herstellung von Copolymeren mit hohen Bindekräften bisher nicht in Erwägung gezogen wurden.

Die nachfolgenden Beispiele dienen der weiteren Erläuterung der Erfindung:

### Herstellung von Vinylacetat-Copolymeren in Form von wässrigen Dispersionen

### Beispiel 1 (Bsp. 1):

In einer Rührkesselkaskade bestehend aus 2 Druckreaktoren zu je 16 Liter Volumen und 1 Drucklosreaktor mit 30 Liter Volumen wird eine kontinuierliche Emulsionspolymerisation durchgeführt. Die 3 Reaktoren sind durch Rohrleitungen miteinander verbunden. Der Massestrom verläuft die Kaskade beginnend im ersten Druckreaktor, dann durch den zweiten Druckreaktor und abschließend durch den dritten Reaktor. Alle Stoffe werden kontinuierlich zugeführt und das Endprodukt aus dem dritten Reaktor kontinuierlich entnommen. Der dritte Reaktor wird im Vakuum (300 mbar) betrieben und überschüssiges Ethylen sowie Vinylchlorid im Unterdruck der Dispersion entzogen und der Abfallverwertung zugeführt.

Die Druckreaktoren werden vor Polymerisationsbeginn mit einer Dispersion eines Copolymeren aus 92% Vinylacetat und 8% Ethylen befüllt; diese Dispersion ist mit 8 Gew.-%, bezogen auf Gesamtmonomer, eines teilverseiften Polyvinylalkohols mit einem Hydrolysegrad von 88 Mol-% und einer Höpplerviskosität von 4 mPas (bestimmt nach DIN 53015 bei 20°C in 4 %-iger wässriger Lösung) stabilisiert. Die Herstellung erfolgt nach dem für den Fachmann geläufigen Stand der Technik in einer Emulsionspolymerisation in Batchfahrweise.

Die kontinuierliche Polymerisation erfolgt bei 70°C und 63 bar, der Druck wird hierbei durch die Ethylendosierung und Druckhalteventile zwischen zweitem und drittem Reaktor (Drucklosreaktor) gesteuert.

In den ersten Druckreaktor werden kontinuierlich die Initiatoren Kaliumpersulfat und Na-hydroxymethansulfinat mit den weiter unten genannten Raten zugegeben. Außerdem werden in den ersten Reaktor die Monomere Vinylacetat, Ethylen und Vinylchlorid mit den unten genannten Raten zugegeben sowie eine wässrige Lösung des oben beschriebenen teilverseiften Polyvinylalkohols.

### Dosierraten in Reaktor 1:

220 g/h Kaliumpersulfat (3%ige wässrige Lösung)
220 g/h Na-hydroxymethansulfinat (1,5%ige wässrige Lösung)
4480 g/h Vinylacetat
1120 g/h Vinylchlorid
1175 g/h Ethylen
4366 g/h wässrige Lösung (bestehend aus 1792 g einer 20%igen wässrigen Lösung des oben beschriebenen Polyvinylalkohols, 2573 g Wasser, 1 g Ameisensäure, 100 mg Eisenammoniumsulfat)

In den zweiten Druckreaktor werden kontinuierlich die Initiatoren Kaliumpersulfat und Na-hydroxymethansulfinat mit den genannten Raten zugegeben.

### Dosierraten in Reaktor 2:

| | |
|---|---|
| 500 g/h | Kaliumpersulfat (3%ige wässrige Lösung) |
| 500 g/h | Na-hydroxymethansulfinat (1,5%ige wässrige Lösung) |

In den Drucklosreaktor werden kontinuierlich die Initiatoren t-Butylhydroperoxid und Na-hydroxymethansulfinat mit den genannten Raten zugegeben

### Dosierraten in Reaktor 3:

| | |
|---|---|
| 200 g/h | tert.Butylhydroperoxid (5%ige wässrige Lösung) |
| 200 g/h | Na-hydroxymethansulfinat (5%ige wässrige Lösung) |

Die Rührkesselkaskade wird für 24h kontinuierlich betrieben.

Das Endprodukt wird über 250 µm abfiltriert und in Lagergebinde abgefüllt.
Von dem eingesetzten Ethylen werden 85% verwertet, der Rest wird beim Transfer in den dritten Reaktor verworfen. Somit ergibt sich eine Polymerzusammensetzung von 68% Vinylacetat, 17% Vinylchlorid und 15% Ethylen. Diese Annahme wird durch die Berechnung der Tg nach der Fox-Gleichung und Vergleich mit dem praktisch gemessenen Wert unterstützt; in beiden Fällen ergeben sich 11°C. Weitere Dispersionseigenschaften sind Tabelle 1 entnehmbar.

### Beispiel 2 (Bsp. 2):

Die Polymerisation erfolgt analog zu Beispiel 1, wobei folgende Raten zum Einsatz kommen:

### Dosierraten in Reaktor 1:

250 g/h Kaliumpersulfat (3%ige wässrige Lösung)
250 g/h Na-hydroxymethansulfinat (1,5%ige wässrige Lösung)
3916 g/h Vinylacetat
1678 g/h Vinylchlorid
1175 g/h Ethylen
4366 g/h wässrige Lösung (bestehend aus 1792 g einer 20%igen wässrigen Lösung des in Beispiel 1 beschriebenen Polyvinylalkohols, 2573 g Wasser, 1 g Ameisensäure, 100 mg Eisenammoniumsulfat)

### Dosierraten in Reaktor 2:

| | |
|---|---|
| 520 g/h | Kaliumpersulfat (3%ige wässrige Lösung) |
| 520 g/h | Na-hydroxymethansulfinat (1,5%ige wässrige Lösung) |

### Dosierraten in Reaktor 3:

| | |
|---|---|
| 200 g/h | tert.Butylhydroperoxid (5%ige wässrige Lösung) |
| 200 g/h | Na-hydroxymethansulfinat (5%ige wässrige Lösung) |

Dispersionseigenschaften sind Tabelle 1 entnehmbar.

### Beispiel 3 (Bsp. 3):

Die Polymerisation erfolgt analog Beispiel 1, wobei folgende Raten zum Einsatz kommen:

### Dosierraten in Reaktor 1:

340 g/h Kaliumpersulfat (3%ige wässrige Lösung)
340 g/h Na-hydroxymethansulfinat (1,5%ige wässrige Lösung)
3356 g/h Vinylacetat
2237 g/h Vinylchlorid
1175 g/h Ethylen
3859 g/h wässrige Lösung (bestehend aus 1789 g einer 20%igen wässrigen Lösung des in Beispiel 1 beschriebenen Polyvinylalkohols, 2069 g Wasser, 1 g Ameisensäure, 100 mg Eisenammoniumsulfat)

### Dosierraten in Reaktor 2:

| | |
|---|---|
| 680 g/h | Kaliumpersulfat (3%ige wässrige Lösung) |
| 680 g/h | Na-hydroxymethansulfinat (1,5%ige wässrige Lösung) |

### Dosierraten in Reaktor 3:

| | |
|---|---|
| 200 g/h | tert.Butylhydroperoxid (5%ige wässrige Lösung) |
| 200 g/h | Na-hydroxymethansulfinat (5%ige wässrige Lösung) |

Dispersionseigenschaften sind Tabelle 1 entnehmbar.

### Vergleichsbeispiel 4 (VBsp. 4):

Die Polymerisation erfolgt analog Beispiel 1, wobei folgende Raten zum Einsatz kommen:

### Dosierraten in Reaktor 1:

120 g/h Kaliumpersulfat (3%ige wässrige Lösung)
120 g/h Na-hydroxymethansulfinat (1,5%ige wässrige Lösung)
5037 g/h Vinylacetat
560 g/h Vinylchlorid
1175 g/h Ethylen
4366 g/h wässrige Lösung (bestehend aus 1792 g einer 20%igen wässrigen Lösung des in Beispiel 1 beschriebenen Polyvinylalkohols, 2573 g Wasser, 1 g Ameisensäure, 100 mg Eisenammoniumsulfat)

### Dosierraten in Reaktor 2:

| | |
|---|---|
| 280 g/h | Kaliumpersulfat (3%ige wässrige Lösung) |
| 280 g/h | Na-hydroxymethansulfinat (1,5%ige wässrige Lösung) |

### Dosierraten in Reaktor 3:

| | |
|---|---|
| 200 g/h | tert.Butylhydroperoxid (5%ige wässrige Lösung) |
| 200 g/h | Na-hydroxymethansulfinat (5%ige wässrige Lösung) |

Dispersionseigenschaften sind Tabelle 1 zu entnehmen.

### Vergleichsbeispiel 5 (VBsp. 5):

Die Polymerisation erfolgt analog Beispiel 1, wobei folgende Raten zum Einsatz kommen:

### Dosierraten in Reaktor 1:

360 g/h Kaliumpersulfat (3%ige wässrige Lösung)
360 g/h Na-hydroxymethansulfinat (1,5%ige wässrige Lösung)
2796 g/h Vinylacetat
2796 g/h Vinylchlorid
1287 g/h Ethylen
3692 g/h Wässrige Lösung (1791 g einer 20%igen wässrigen Lösung des in Beispiel 1 beschriebenen Polyvinylalkohols, 1900 g Wasser, 1 g Ameisensäure, 100 mg Eisenammoniumsulfat)

### Dosierraten in Reaktor 2:

| | |
|---|---|
| 720 g/h | Kaliumpersulfat (3% ige wässrige Lösung) |
| 720 g/h | Na-hydroxymethansulfinat (1,5%ige wässrige Lösung) |

### Dosierraten in Reaktor 3:

| | |
|---|---|
| 200 g/h | tert.Butylhydroperoxid (5%ige wässrige Lösung) |
| 200 g/h | Na-hydroxymethansulfinat (5%ige wässrige Lösung) |

Dispersionseigenschaften sind Tabelle 1 entnehmbar.

### Vergleichsbeispiel 6 (VBsp. 6):

In einem Druckreaktor mit einem Volumen von 600 Liter wurden folgende Komponenten vorgelegt:
106 kg Wasser,
55 kg einer 20%igen wässrigen Lösung eines teilverseiften Polyvinylalkohols mit einem Hydrolysegrad von 88 Mol-% und einer Höpplerviskosität von 4 mPas (bestimmt nach DIN 53015 bei 20°C in 4 %-iger wässriger Lösung),
51 g Ameisensäure (85%ig in Wasser),
552 g Eisenammoniumsulfatlösung (1%ig in Wasser).

Der Reaktor wurde evakuiert. Anschließend wurden zur Vorlage 138 kg Vinylacetat und 17 kg Vinylchlorid gegeben. Anschließend wurde der Reaktor auf 55°C aufgeheizt und mit einem Ethylendruck von 53 bar beaufschlagt (entsprechend einer Menge von 42 kg Ethylen).

Die Polymerisation wurde durch Start der Dosierung einer 3%igen wässrigen Kaliumpersulfatlösung und einer 1,5%igen wässrigen Na-hydroxymethansulfinatlösung (Brüggolit) mit je einer Rate von 4,3 kg/h gestartet. 30 Minuten nach Polymerisationsbeginn wurde eine Monomermischung, bestehend aus 69 kg Vinylacetat und 11 kg Vinylchlorid während 2,5 Stunden zudosiert. Eine wässrige Dosierung, bestehend aus 33 kg der vorgenannten 20%igen Polyvinylalkohollösung und 17 kg Wasser, wurde ebenfalls 30 Minuten nach Reaktionsbeginn mit einer Rate von 20 kg/h während einem Zeitraum von 2,5 h dosiert. Nach Ende der Monomer- und der wässrigen Dosierung liefen die Initiatordosierungen für weitere 90 Minuten, um den Ansatz auszupolymerisieren. Die Gesamtpolymerisationszeit betrug 5 Stunden.

Die Dispersion wurde anschließend zur Abtrennung von überschüssigem Ethylen und Vinylchlorid in den Drucklosreaktor, in dem ein Druck von 0,7 bar angelegt wurde, transferiert und dort durch Zugabe von 1,6 kg einer 10%igen wässrigen t-Butylhydroperoxidlösung und 1,6 kg einer 5%igen wässrigen Na-hydroxymethansulfinatlösung (Brüggolit) nachpolymerisiert. Der pH-Wert wurde durch Zugabe von Natronlauge (10%ige wässrige Lösung) auf 5 eingestellt. Zuletzt wird der Ansatz über ein 250µm Sieb aus dem Drucklosreaktor abgefüllt.

### Dispersionseigenschaften sind Tabelle 1 entnehmbar.

### Beispiel 7 (Bsp. 7):

Analog zu Vergleichsbeispiel 6 mit folgenden Änderungen der Monomerzusammensetzung.

### Vorlage:

111 kg Vinylacetat und 41 kg Vinylchlorid

### Dosierung:

55 kg Vinylacetat und 28 kg Vinylchlorid
Alle weiteren Mengen und Parameter waren analog zu Vergleichsbeispiel 6.

### Dispersionseigenschaften sind Tabelle 1 entnehmbar.

### Vergleichsbeispiel 8 (VBsp. 8):

Analog zu Vergleichsbeispiel 6 mit folgenden Änderungen der Monomerzusammensetzung.

### Vorlage:

83 kg Vinylacetat und 70,5 kg Vinylchlorid

### Dosierung:

34,5 kg Vinylacetat und 47 kg Vinylchlorid
Alle weiteren Mengen und Parameter waren analog Vergleichsbeispiel 6.

### Dispersionseigenschaften sind Tabelle 1 entnehmbar.

### Vergleichsbeispiel 9 (VBsp. 9):

Analog Beispiel I der EP0149098 wurde eine Dispersion mit der Zusammensetzung 16% Vinylacetat, 64% Vinylchlorid und 20% Ethylen hergestellt.

Dispersionseigenschaften sind Tabelle 1 entnehmbar.

### Vergleichsbeispiel 10 (VBsp. 10):

Vinylacetat-Ethylen-Copolymer-Dispersion (92 Gew.-% Vinylacetat, 8 Gew.-% Ethylen), stabilisiert mit 8 Gew.-% Polyvinylalkohol 04/88.

**Tabelle 1: Eigenschaften der wässrigen Dispersionen der Vinylacetat-Copolymere:**

| Beispiel | FG^{a)} | pH | Viskosität^{b)} | Dw^{c)} | Tgₑₓₚ^{d)} | Tg_{ber}^{e)} | Zusammensetzung der Copolymere Vac/VC/E^{f)} |
|---|---|---|---|---|---|---|---|
| | [%] | | [mPas] | [nm] | [°C] | [°C] | [Gew.-%] |
| Bsp.1 | 55,0 | 2,5 | 190 | 1320 | 11,0 | 11,3 | 68/17/15 |
| Bsp.2 | 54,5 | 2,5 | 210 | 1050 | 13,4 | 15,1 | 59/26/15 |
| Bsp.3 | 55,0 | 2,4 | 220 | 1060 | 18,5 | 18,6 | 51/34/15 |
| VBsp.4 | 57,1 | 2,6 | 270 | 1640 | 12,6 | 10,1 | 76/9/15 |
| VBsp.5 | 54,1 | 2,7 | 210 | 920 | 18,7 | 20,3 | 42/42/16 |
| VBsp.6 | 55,3 | 3,1 | 420 | 680 | 11,5 | 9,3 | 75/10/15 |
| Bsp.7 | 54,8 | 3,2 | 350 | 750 | 14,2 | 14,3 | 60/25/15 |
| VBsp.8 | 54,3 | 3,1 | 450 | 790 | 19,6 | 20,3 | 42,5/42,5/15 |
| VBsp.9 | 63,8 | 7,0 | 16800 | 760 | 8,0^{h)} | 22,3 | 16/64/20 |

| | | | | | | | |
|---|---|---|---|---|---|---|---|
| a) FG: Festgehalt der wässrigen Dispersion, bestimmt nach EN ISO 3251; b) bestimmt bei 23°C mittels eines Brookfield-Viskosimeters mit Spindel 5 und 20 Umdrehungen pro Minute; c) bestimmt mit dem Messgerät Beckmann Coulter LS nach ISO 13320; d) experimentell bestimmte Glasübergangstemperatur Tg; bestimmt nach DIN 53765; e) mittels der Fox-Gleichung berechnete Glasübergangstemperatur Tg; f) Vac steht für Vinylacetat, VC für Vinylchlorid und E für Ethylen; h) Dispersion enthält Weichmacher. | | | | | | | |

### Herstellung von Vinylacetat-Copolymeren in Form von in Wasser redispergierbaren Pulvern

Der Dispersion des jeweiligen (Vergleichs)Beispiels 1 bis 10 von Tabelle 2 wurden 2,0 Gew.-%, bezogen auf den Polymergehalt der Dispersion (fest/fest), eines teilverseiften Polyvinylalkohols mit einem Hydrolysegrad von 88 Mol-% und einer Höpplerviskosität von 13 mPas und 6,5 Gew.-%, bezogen auf den Polymergehalt der Dispersion (fest/fest), eines teilverseiften Polyvinylalkohols mit einem Hydrolysegrad von 88 Mol-% und einer Höpplerviskosität von 4 mPas (je bestimmt nach DIN 53015 bei 20°C in 4 %-iger wässriger Lösung) zugegeben. Anschließend wurde in üblicher Weise durch Sprühtrocknung, mit einer Eintrittstemperatur von 130°C und einer Austrittstemperatur von 80°C, getrocknet und das jeweilige Vinylacetat-Copolymer in Form eines in Wasser redispergierbaren Pulvers erhalten. Den Pulvern wurden 3 Gew.-% Kaolin und 14 Gew.-% Calciumcarbonat als Antibackmittel zugesetzt.

**Tabelle 2: Vinylacetat-Copolymere in Form von Pulvern:**

| Pulver | Dispersion |
|---|---|
| P1 | Bsp.1 |
| P2 | Bsp.2 |
| P3 | Bsp.3 |
| PV4 | VBsp.4 |
| PV5 | VBsp.5 |
| PV6 | VBsp.6 |
| P7 | Bsp.7 |
| PV8 | VBsp.8 |
| PV9 | VBsp.9 |
| PV10 | VBsp.10 |

### Austestung der Vinylacetat-Copolymere in Fliesenklebern

Die Pulver wurden auf ihre Eignung für die Verklebung keramischer Fliesen untersucht. Trockenmörtel folgender Zusammensetzung wurden hergestellt:
420 Gew.-T Milke Zement 42,5
446 Gew.-T Quarzsand
80 Gew.-T Calciumcarbonat
4 Gew.-T Tylose MB60000
10 Gew.-T Calciumformiat
40 Gew.-T Dispersionspulver.

Pro 100 g Trockenmörtel wurden 25 g Wasser eingesetzt.

Die Ausprüfung nach EN1348 (Haftzugfestigkeit) und EN1346 (offene Zeit) ergab die in Tabelle 3 aufgeführten Austestungsergebnisse.

**Tabelle 3: Ergebnisse der Haftzugprüfung im Fliesenkleber:**

| Pulver | Haftzugfestigkeit [N/mm²] | | | | offene Zeit 30' |
|---|---|---|---|---|---|
| | Normklima^{a)} | Wasser^{b)} | Wärme^{c)} | FT^{d)} | |
| P1 | 1,95 | 1,22 | 1,85 | 1,26 | 0,73 |
| P2 | 1,92 | 1,28 | 2,00 | 1,41 | 0,85 |
| P3 | 1,98 | 1,29 | 1,78 | 1,39 | 0,83 |
| PV4 | 2,05 | 0,74 | 1,94 | 0,82 | 0,74 |
| PV5 | 1,96 | 0,85 | 1,55 | 0,91 | 0,45 |
| PV6 | 1,96 | 0,77 | 1,85 | 0,93 | 0,65 |
| P7 | 1,88 | 1,19 | 1,86 | 1,22 | 0,78 |
| PV8 | 1,68 | 0,77 | 1,57 | 0,85 | 0,37 |
| PV9 | 1,75 | 0,83 | 1,45 | 0,90 | 0,42 |
| PV10 | 2,20 | 0,65 | 2,10 | 0,73 | 0,95 |

| | | | | | |
|---|---|---|---|---|---|
| a) Austestung nach Normklimalagerung entsprechend EN1348; b) Austestung nach Wasserlagerung entsprechend EN1348; c) Austestung nach Wärmelagerung entsprechend EN1348; d) Austestung nach Frost-Tau-Lagerung entsprechend EN1348. | | | | | |

Die erfindungsgemäßen Dispersionspulver P1, P2, P3 und P7 zeigen nach allen Lagerungen Werte deutlich über 1,0 N/mm². Auch die offene Zeit nach 30 Minuten entspricht der Normforderung von 0,5 N/mm² entsprechend EN1346. Die Dispersionspulver mit niedrigerem Vinylchloridanteil im Polymeren PV4 und PV6 erreichen nach Wasserlagerung nicht die Normforderung von 1,0 N/mm². Das Gleiche gilt für die Dispersionspulver mit höherem Vinylchloridanteil in PV5, PV8 und PV9. Diese zeigen zusätzlich einen Abfall der Werte nach Wärmelagerung und in der offenen Zeit. Das Pulver PV10 enthaltend ein Vinylacetat-Ethylen-Copolymer erreicht ebenfalls nicht die geforderten 1,0 N/mm² nach Wasserlagerung.

## Patentansprüche

1. Vinylacetat-Copolymere in Form von Schutzkolloid-stabilisierten, in Wasser redispergierbaren Polymerpulvern erhältlich mittels radikalisch initiierter Polymerisation von ethylenisch ungesättigten Monomeren in wässrigem Medium und anschließender Trocknung, **dadurch gekennzeichnet, dass** bei der Polymerisation als ethylenisch ungesättigte Monomere 40 bis 80 Gew.-% Vinylacetat, 15 bis 35 Gew.-% Vinylchlorid, 1 bis 25 Gew.-% Ethylen und gegebenenfalls ein oder mehrere weitere ethylenisch ungesättigte Comonomere eingesetzt werden, wobei sich die Angaben in Gew.-% auf das Gesamtgewicht der ethylenisch ungesättigten Monomere beziehen und sich auf 100 Gew.-% aufaddieren, und dass keine Emulgatoren und als Schutzkolloide keine Cellulose und keine Cellulose-Derivate enthalten sind.

2. Vinylacetat-Copolymere in Form von Schutzkolloid-stabilisierten, in Wasser redispergierbaren Polymerpulvern gemäß Anspruch 1, **dadurch gekennzeichnet, dass** die Vinylacetat-Copolymere auf 50 bis 75 Gew.-% Vinylacetat, 20 bis 30 Gew.-% Vinylchlorid und 5 bis 20 Gew.-% Ethylen basieren, wobei sich die Angaben in Gew.-% auf das Gesamtgewicht der ethylenisch ungesättigten Monomere beziehen und sich auf 100 Gew.-% aufaddieren.

3. Vinylacetat-Copolymere in Form von Schutzkolloid-stabilisierten, in Wasser redispergierbaren Polymerpulvern gemäß Anspruch 1 oder 2, **dadurch gekennzeichnet, dass** bei der Polymerisation keine weiteren Comonomere eingesetzt werden.

4. Verfahren zur Herstellung von Vinylacetat-Copolymeren in Form von Schutzkolloid-stabilisierten, in Wasser redispergierbaren Polymerpulvern durch radikalisch initiierte Polymerisation von ethylenisch ungesättigten Monomeren in wässrigem Medium und anschließende Trocknung, **dadurch gekennzeichnet, dass** als ethylenisch ungesättigte Monomere 40 bis 80 Gew.-% Vinylacetat, 15 bis 35 Gew.-% Vinylchlorid, 1 bis 25 Gew.-% Ethylen und gegebenenfalls ein oder mehrere weitere ethylenisch ungesättigte Comonomere polymerisiert werden, wobei sich die Angaben in Gew.-% auf das Gesamtgewicht der ethylenisch ungesättigten Monomere beziehen und sich auf 100 Gew.-% aufaddieren, und keine Emulgatoren sowie als Schutzkolloide keine Cellulose und keine Cellulose-Derivate eingesetzt werden.

5. Verfahren zur Herstellung von Vinylacetat-Copolymeren in Form von Schutzkolloid-stabilisierten, in Wasser redispergierbaren Polymerpulvern gemäß Anspruch 4, **dadurch gekennzeichnet, dass** die Polymerisation nach Batch-, Semibatch- oder in kontinuierlichen Verfahren erfolgt.

6. Verfahren zur Herstellung von Vinylacetat-Copolymeren in Form von Schutzkolloid-stabilisierten, in Wasser redispergierbaren Polymerpulvern gemäß Anspruch 5, **dadurch gekennzeichnet, dass** im Falle der Batch- oder der Semibatch-Verfahren mindestens 50 Gew.-% der Gesamtmenge an Vinylchlorid vorgelegt und die gegebenenfalls verbleibende restliche Menge an Vinylchlorid zudosiert wird.

7. Verfahren zur Herstellung von Vinylacetat-Copolymeren in Form von Schutzkolloid-stabilisierten, in Wasser redispergierbaren Polymerpulvern gemäß Anspruch 5, **dadurch gekennzeichnet, dass** im Falle der kontinuierlichen Verfahren die Polymerisation in einer Rührkesselkaskade umfassend ein oder mehrere Druckreaktoren und ein oder mehrere Drucklosreaktoren durchgeführt wird.

8. Verfahren zur Herstellung von Vinylacetat-Copolymeren in Form von Schutzkolloid-stabilisierten, in Wasser redispergierbaren Polymerpulvern gemäß Anspruch 7, **dadurch gekennzeichnet, dass** mindestens 75 Gew.-% der Gesamtmenge an Vinylchlorid in den ersten Reaktor der Rührkesselkaskade zudosiert wird.

9. Baustoffmassen enthaltend ein oder mehrere hydraulisch abbindende Bindemittel, ein oder mehrere Füllstoffe und gegebenenfalls ein oder mehrere Additive, **dadurch gekennzeichnet, dass** die Baustoffmassen zusätzlich ein oder mehrere Vinylacetat-Copolymere in Form von Schutzkolloid-stabilisierten, in Wasser redispergierbaren Polymerpulvern gemäß Anspruch 1 bis 3 enthalten.

10. Baustoffmassen gemäß Anspruch 9, **dadurch gekennzeichnet, dass** die Baustoffmassen 10 bis 40 Gew.-% hydraulisch-abbindende Bindemittel, 0,5 bis 15 Gew.-% Vinylacetat-Copolymere, 45 bis 80 Gew.-% Füllstoffe und gegebenenfalls 0 bis 5 Gew.-% Additive enthalten, wobei sich die Angaben in Gew.-% auf das Trockengewicht der Baustoffmassen beziehen und sich insgesamt auf 100 Gew.-% addieren.

11. Verwendung der Baustoffmassen gemäß Anspruch 9 oder 10 als Baukleber, Putze, Spachtelmassen, Verlaufsmassen, Dichtschlämme, Fugenmörtel oder zur Betonmodifizierung.

12. Verwendung der Baustoffmassen nach Anspruch 11 als Vollwärmeschutzkleber oder Fliesenkleber.

## Claims

1. Vinyl acetate copolymers in the form of protective colloid-stabilized polymer powders redispersible in water, said copolymers being obtainable by means of radically initiated polymerization of ethylenically unsaturated monomers in an aqueous medium and subsequent drying, **characterized in that** ethylenically unsaturated monomers used in the polymerization are 40 to 80 wt% of vinyl acetate, 15 to 35 wt% of vinyl chloride, 1 to 25 wt% of ethylene and optionally one or more further ethylenically unsaturated comonomers, the figures in weight percent being based on the total weight of the ethylenically usaturated monomers and adding up to 100 wt%, and **in that** no emulsifiers are included and no cellulose and no cellulose derivatives are included as protective colloids.

2. Vinyl acetate copolymers in the form of protective colloid-stabilized polymer powders redispersible in water, according to Claim 1, **characterized in that** the vinyl acetate copolymers are based on 50 to 75 wt% of vinyl acetate, 20 to 30 wt% of vinyl chloride, and 5 to 20 wt% of ethylene, the figures in weight percent being based on the total weight of the ethylenically unsaturated monomers and adding up to 100 wt%.

3. Vinyl acetate copolymers in the form of protective colloid-stabilized polymer powders redispersible in water, according to Claim 1 or 2, **characterized in that** no further comonomers are used in the polymerization.

4. Process for preparing vinyl acetate copolymers in the form of protective colloid-stabilized polymer powders redispersible in water, by radically initiated polymerization of ethylenically unsaturated monomers in an aqueous medium and subsequent drying, **characterized in that** ethylenically unsaturated monomers polymerized are 40 to 80 wt% of vinyl acetate, 15 to 35 wt% of vinyl chloride, 1 to 25 wt% of ethylene and optionally one or more further ethylenically unsaturated comonomers, the figures in weight percent being based on the total weight of the ethylenically unsaturated monomers and adding up to 100 wt%, and no emulsifiers are used and no cellulose and no cellulose derivatives are used as protective colloids.

5. Process for preparing vinyl acetate copolymers in the form of protective colloid-stabilized polymer powders redispersible in water, according to Claim 4, **characterized in that** the polymerization takes place by batch or semibatch or in continuous processes.

6. Process for preparing vinyl acetate copolymers in the form of protective colloid-stabilized polymer powders redispersible in water, according to Claim 5, **characterized in that** in the case of the batch or the semibatch processes, at least 50 wt% of the total amount of vinyl chloride is included in the initial charge and any remaining residual amount of vinyl chloride is metered in.

7. Process for preparing vinyl acetate copolymers in the form of protective colloid-stabilized polymer powders redispersible in water, according to Claim 5, **characterized in that** in the case of the continuous processes the polymerization is carried out in a stirred tank cascade comprising one or more pressure reactors and one or more unpressurized reactors.

8. Process for preparing vinyl acetate copolymers in the form of protective colloid-stabilized polymer powders redispersible in water, according to Claim 7, **characterized in that** at least 75 wt% of the total amount of vinyl chloride is metered into the first reactor of the stirred tank cascade.

9. Building material compositions comprising one or more hydraulically setting binders, one or more fillers, and optionally one or more additives, **characterized in that** the building material compositions further comprise one or more than one vinyl acetate copolymer in the form of protective colloid-stabilized polymer powders redispersible in water, according to Claim 1 to 3.

10. Building material compositions according to Claim 9, **characterized in that** the building material compositions comprise 10 to 40 wt% of hydraulically setting binders, 0.5 to 15 wt% of vinyl acetate copolymers, 45 to 80 wt% of fillers, and optionally 0 to 5 wt% of additives, the figures in weight percent being based on the dry weight of the building material compositions and adding up in total to 100 wt%.

11. Use of the building material compositions according to Claim 9 or 10 as construction adhesives, renders, filling compounds, leveling compounds, grouts, jointing mortars or for concrete modification.

12. Use of the building material compositions according to Claim 11 as thermal insulation composite system adhesives or tile adhesives.

## Revendications

1. Copolymères d'acétate de vinyle sous la forme de poudres polymères redispersibles dans l'eau, stabilisées par un colloïde protecteur, pouvant être obtenus par polymérisation initiée radicalairement de monomères éthyléniquement insaturés dans un milieu aqueux, puis séchage, **caractérisés en ce que** 40 à 80 % en poids d'acétate de vinyle, 15 à 35 % en poids de chlorure de vinyle, 1 à 25 % en poids d'éthylène et éventuellement un ou plusieurs comonomères éthyléniquement insaturés supplémentaires sont utilisés en tant que monomères éthyléniquement insaturés lors de la polymérisation, les données en % en poids se rapportant au poids total des monomères éthyléniquement insaturés et leur somme étant de 100 % en poids, et **en ce qu'**aucun émulsifiant et, en tant que colloïdes protecteurs, aucune cellulose et aucun dérivé de cellulose ne sont contenus.

2. Copolymères d'acétate de vinyle sous la forme de poudres polymères redispersibles dans l'eau, stabilisées par un colloïde protecteur selon la revendication 1, **caractérisés en ce que** les copolymères d'acétate de vinyle sont à base de 50 à 75 % en poids d'acétate de vinyle, 20 à 30 % en poids de chlorure de vinyle et 5 à 20 % en poids d'éthylène, les données en % en poids se rapportant au poids total des monomères éthyléniquement insaturés et leur somme étant de 100 % en poids.

3. Copolymères d'acétate de vinyle sous la forme de poudres polymères redispersibles dans l'eau, stabilisées par un colloïde protecteur selon la revendication 1 ou 2, **caractérisés en ce qu'**aucun comonomère supplémentaire n'est utilisé lors de la polymérisation.

4. Procédé de fabrication de copolymères d'acétate de vinyle sous la forme de poudres polymères redispersibles dans l'eau, stabilisées par un colloïde protecteur, par polymérisation initiée radicalairement de monomères éthyléniquement insaturés dans un milieu aqueux, puis séchage, **caractérisé en ce que** 40 à 80 % en poids d'acétate de vinyle, 15 à 35 % en poids de chlorure de vinyle, 1 à 25 % en poids d'éthylène et éventuellement un ou plusieurs comonomères éthyléniquement insaturés supplémentaires sont polymérisés en tant que monomères éthyléniquement insaturés, les données en % en poids se rapportant au poids total des monomères éthyléniquement insaturés et leur somme étant de 100 % en poids, et **en ce qu'**aucun émulsifiant et, en tant que colloïdes protecteurs, aucune cellulose et aucun dérivé de cellulose ne sont utilisés.

5. Procédé de fabrication de copolymères d'acétate de vinyle sous la forme de poudres polymères redispersibles dans l'eau, stabilisées par un colloïde protecteur selon la revendication 4, **caractérisé en ce que** la polymérisation a lieu par des procédés discontinus, semi-discontinus ou continus.

6. Procédé de fabrication de copolymères d'acétate de vinyle sous la forme de poudres polymères redispersibles dans l'eau, stabilisées par un colloïde protecteur selon la revendication 5, **caractérisé en ce que**, dans le cas des procédés discontinus ou semi-discontinus, au moins 50 % en poids de la quantité totale de chlorure de vinyle est chargée initialement, et la quantité résiduelle éventuellement restante de chlorure de vinyle est ajoutée.

7. Procédé de fabrication de copolymères d'acétate de vinyle sous la forme de poudres polymères redispersibles dans l'eau, stabilisées par un colloïde protecteur selon la revendication 5, **caractérisé en ce que**, dans le cas des procédés continus, la polymérisation est réalisée dans une cascade de cuves agitées comprenant un ou plusieurs réacteurs sous pression et un ou plusieurs réacteurs sans pression.

8. Procédé de fabrication de copolymères d'acétate de vinyle sous la forme de poudres polymères redispersibles dans l'eau, stabilisées par un colloïde protecteur selon la revendication 7, **caractérisé en ce qu'**au moins 75 % en poids de la quantité totale de chlorure de vinyle est ajoutée dans le premier réacteur de la cascade de cuves agitées.

9. Matériaux de construction contenant un ou plusieurs liants à prise hydraulique, une ou plusieurs charges et éventuellement un ou plusieurs additifs, **caractérisés en ce que** les matériaux de construction contiennent en outre un ou plusieurs copolymères d'acétate de vinyle sous la forme de poudres polymères redispersibles dans l'eau, stabilisées par un colloïde protecteur, selon les revendications 1 à 3.

10. Matériaux de construction selon la revendication 9, **caractérisés en ce que** les matériaux de construction contiennent 10 à 40 % en poids de liants à prise hydraulique, 0,5 à 15 % en poids de copolymères d'acétate de vinyle, 45 à 80 % en poids de charges et éventuellement 0 à 5 % en poids d'additifs, les données de % en poids se rapportant au poids sec des matériaux de construction et leur somme étant au total de 100 % en poids.

11. Utilisation des matériaux de construction selon la revendication 9 ou 10 en tant que colles de construction, enduits, mastics, matières de nivellement, boues d'étanchéité, mortiers d'assemblage ou pour la modification de béton.

12. Utilisation des matériaux de construction selon la revendication 11 en tant que colles d'isolation thermique poussée ou colles à carreaux.
